Europäisches Patentamt

European Patent Office

Office européen des brevets

(19)

(11) Veröffentlichungsnummer: **0 023 374**
A1

(12) **EUROPÄISCHE PATENTANMELDUNG**

(21) Anmeldenummer: **80200685.8**

(22) Anmeldetag: **14.07.80**

(51) Int. Cl.³: **C 04 B 19/02**
C 04 B 43/00, C 04 B 41/32
E 04 F 21/12

(30) Priorität: **28.07.79 DE 2930703**

(43) Veröffentlichungstag der Anmeldung:
**04.02.81 Patentblatt 81/5**

(84) Benannte Vertragsstaaten:
**AT BE CH DE FR GB IT LI NL SE**

(71) Anmelder: **Rütgerswerke Aktiengesellschaft**
**Mainzer Landstrasse 217**
**D-6000 Frankfurt a.Main 1(DE)**

(72) Erfinder: **Hacker, Dieter, Ing. grad.**
**Heinestrasse 6**
**D-7105 Leingarten(DE)**

(72) Erfinder: **Oellig, Rudi, Ing. grad.**
**Karl-Schleich-Strasse 30**
**D-6600 Saarbrücken(DE)**

(54) **Verfahren zum Aufbringen von Isolationsschichten auf Oberflächen.**

(57) Zur Isolation von Oberflächen wird auf diese Isolations-material in Form kleiner Partikel aufgebracht, die mit einem Bindemittel umhüllt sind. Das Aufbringen erfolgt durch Blasen, wobei die Partikel während ihres Fluges vom Aufblasgerät zur Oberfläche mit dem Bindemittel umhüllt werden.

EP 0 023 374 A1

RÜTGERSWERKE Aktiengesellschaft, 6000 Frankfurt a.Main

Pat-734-R

P a t e n t a n m e l d u n g

Verfahren zum Aufbringen von Isolationsschichten auf
Oberflächen

Die Erfindung betrifft ein Verfahren zum Aufbringen von
Isolationsschichten, insbesondere von Wärme- und/oder
schalldämmenden Isolationsschichten, auf Oberflächen,
insbesondere Gebäudeflächen.
Außenwände werden häufig mit sogenannten Wärmedämmputzen
versehen, die in herkömmlicher Weise aufgetragen werden.
Hier handelt es sich meist um hydraulische Bindemittel,
die mit mineralischen Zuschlagstoffen und Polystyrolperlen
versehen sind. Durch die mineralischen Zuschlagstoffe
und das hydraulische Bindemittel entstehen jedoch Kältebrücken, so daß keine befriedigenden Wärmedämmwerte erreicht
werden. Auch die aufzubringenden Schichtstärken, die in
einem Arbeitsgang aufgebracht werden können, sind begrenzt, da die Eigentragfestigkeit der hydraulischen
Bindemittel im nicht abgebundenen Zustand sehr gering
ist. Damit werden die erreichbaren Wärmedämmeigenschaften
zwangsläufig eingeschränkt.

-2-

Weiterhin ist bekannt, vorgefertigte Wärmedämmplatten, z.B. aus Polystyrol, auf die zu isolierenden Flächen aufzubringen. Dies setzt bestimmte Befestigungselemente voraus oder aber die Platten bzw. Bahnen müssen großflächig aufgeklebt werden. Das Aufkleben ist bei unebenem Mauerwerk dabei erheblich erschwert. Darüber hinaus müssen die Platten bzw. Bahnen den örtlichen Gegebenheiten angepaßt und zugeschnitten werden.
Darüber hinaus bedürfen die sich ergebenden Stoßfugen einer besonderen Behandlung, die Zeitaufwand und zusätzliche Kosten verursachen.

Aufgabe der Erfindung war es deshalb, ein Verfahren zum Aufbringen von Isolationsschichten auf Oberflächen zu finden, bei dem die erwähnten Nachteile vermieden werden. Diese Aufgabe wird durch das erfindungsgemäße Verfahren gelöst, das dadurch gekennzeichnet ist, daß man das Isolationsmaterial in Form kleiner, mit einem Bindemittel umhüllter Partikel auf die zu isolierende Oberfläche aufbringt.

Vorzugsweise wird das Isolationsmaterial in Form kugelförmiger Teilchen mit einem Durchmesser von 1 - 20 mm, insbesondere von 2 - 8 mm, aufgebracht. Andere Partikelformen, z.B. unregelmäßige Körner, sind aber auch verwendbar.

Die Applikation des Isolationsmaterials auf die zu isolierende Oberfläche wird vorzugsweise durchgeführt, indem man die Teilchen auf die zu isolierende Oberläche aufbläst, was z.B. mit einem geeigneten Spritzgerät unter Druck erfolgen kann, und die Teilchen während ihres Fluges vom Aufblasgerät zur zu isolierenden Oberfläche mit dem Bindemittel umhüllt. Der Abstand zwischen Aufblasgerät und Oberfläche richtet sich dabei insbesondere nach der Art des verwendeten Aufblasgerätes, und nach Gewicht, Art und Zusammensetzung von Isolationsmaterial und Bindemittel. Er soll so gewählt werden, daß eine möglichst vollständige und gleichmäßige Umhüllung der Isolationspartikel durch den Kleber gewährleistet ist; durchschnittlich beträgt der Abstand 3o-1oo cm. Besonders gut hat sich ein Verfahren bewährt, bei dem das Bindemittel durch neben den Ausblasöffnungen für das Isolationsmaterial angebrachte Düsen appliziert wird. Das Isolationsmaterial und das Bindemittel werden dabei vorzugsweise in Vorratsbehältern gelagert, die mit dem Applikationsgerät unter Zwischenschaltung geeigneter Transporthilfen, wie z.B.Pumpen, verbunden sind, und je nach verwendetem Bindemittel gegebenenfalls beheizbar sind.

Zur Durchführung des Verfahrens als besonders geeignet hat sich eine Spritzpistole erwiesen, wie sie in der deutschen Patentanmeldung und Gebrauchsmusteranmeldung der Fa. J. Frager, 711 Öhringen, vom gleichen Anmeldetag beschrieben ist.
Die Schichtstärke der Isolationsschichten richtet sich insbesondere nach dem verwendeten Isolationsmaterial, der Partikelgröße, dem Bindemittel und der Zweckbestimmung. Die Dicke beträgt dabei vorzugsweise 1 - 8, insbesondere 2 - 6 cm. Infolge des nach dem erfindungsgemäßen Verfahren benötigten vergleichsweise geringen Bindemittelgehaltes werden dabei sehr gute Wärmeleitzahlen erreicht, die z.B. im normalen Temperaturbereich zwischen 105 und 150 J/mh$^o$C liegen.

Als Isolationsmaterial werden vorzugsweise natürliche oder künstliche Leichtstoffe verwendet,wie z.B. Kork, Schaumstoffe oder auch Glasschaum, wobei sich die Auswahl auch nach den mechanischen Anforderungen (z.B.Trittfestigkeit), die an die Isolationsschicht gestellt werden, richtet.
Besonders geeignet sind handelsübliche, vorgeschäumte Polystyrolkugeln.

Als Bindemittel für die Isoliermaterialteilchen wird ein dafür geeigneter Kleber verwendet. Besonders haben sich dabei solche Kleber bewährt, die nach dem Aufbringen auf die Isolationsteilchen und gegebenenfalls teilweisem Abdunsten des Lösungsmittels eine hohe Anfangs- und Eigenklebrigkeit besitzen, um die gewünschte Schichtstärke ohne Schwierigkeit auftragen zu können. Sehr geeignet sind hierzu natürliche oder künstliche Polymere wie z.B. Polyvinylbutyrale, Äthylenvinylacrylate, Butadienacrylnitril-Kautschuke, Phenoxharze, vorzugsweise gelöst in einem leicht siedenden, schwer- oder unbrennbaren Lösungsmittel, wie z.B. Methylenchlorid oder Methyläthylketon.

Besonders bewährt haben sich insbesondere solche Bindemittel, die die oben genannten Anforderungen erfüllen, und bei denen neben der physikalischen Trocknung in der Anfangsphase auch noch chemische Vernetzungsreaktionen ablaufen. Diese Bindemittel sind in der Regel in weiten Grenzen zu modifizieren und auf die einzelnen Anforderungen optimal einzustellen.
So bieten sie die Möglichkeit, bei entsprechender Produktauswahl schwer entflammbare Bindemittel einzusetzen . Die zusätzliche chemische Vernetzung (Härtungsreaktion) erlaubt es, die Beständigkeit gegen aggressive Einflüsse wesentlich zu verbessern. Besondere Bedeutung kommt dabei der Alkalibeständigkeit zu, da in der Regel die Untergründe und die nachträglich aufgebrachten Sichtputze durch die angewendeten hydraulischen Bindemittel stark alkalisch wirken, was in Anwesenheit von Wasser Verseifungsreaktionen auslösen kann.

Solche härtbaren Bindemittel können z.B. härtbare Polymere, wie z.B. ungesättigte Polyester, aber auch Phenoplaste, enthalten. Besonders geeignet sind aber Epoxidharze in einem Molekulargewichtsbereich von etwa 400 bis etwa 30 000, oder Mischungen von Molekulargewichtsfraktionen aus diesem Bereich. Zur Erhöhung der Flammwidrigkeit hat es sich dabei als zweckmäßig erwiesen, als Bisphenolkomponente bei der Herstellung der Epoxidharze ganz oder teilweise ein bromiertes Bisphenol, z.B. das 4,4-Dihydroxytetrabromdiphenylpropan, einzusetzen. Es können aber auch z.B. Epoxidharze auf der Basis von Novolaken als Phenolkomponente eingesetzt werden. Als Härtungsmittel können die üblichen Epoxidharz-Härter verwendet werden, wobei sich insbesondere höhermolekulare Polyaminoamide, Polyaminoamidaddukte oder Polyaminaddukte als geeignet erwiesen haben. Vorzugsweise werden die als Bindemittel eingesetzten Kleber in Lösung oder Emulsion verwendet.

Die Temperatur, bei der das Verfahren durchgeführt werden kann, richtet sich vor allem nach dem verwendeten Bindemittel. So kann es z.B. zweckmäßig sein, in einem Heißluftstrom zu arbeiten. Vorzugsweise wird aber bei normaler Außentemperatur oder Raumtemperatur gearbeitet.

Der Druck, unter dem Isolationsmaterial und Bindemittel auf die zu isolierende Oberfläche aufgebracht werden, richtet sich insbesondere nach der Art und dem Gewicht des Isolationsmaterials, nach der Art und Beschaffenheit der zu isolierenden Oberfläche und nach dem Abstand von Aufblasgerät zu Oberfläche. Die zweckmäßigsten Bedingungen können dabei leicht eruiert werden.

Für bestimmte Anwendungsgebiete kann es auch zweckmäßig sein, zusammen mit den Isolationspartikeln andere Materialien, wie z.B. gehäckselte Glasfasern als Verstärkungsmaterial, aufzubringen. Die Applikation kann dabei gleichzeitig oder aber auch zeitlich hintereinander erfolgen, wobei man in letzterem Fall aufeinanderfolgende Schichten von Isolationsmaterial und z.B. Glasfasern erhält.

Das erfindungsgemäße Verfahren ist unabhängig von der Art und der Beschaffenheit der zu isolierenden Oberfläche, die z.B. aus Beton, Mauerwerk, Holz oder anderen Werkstoffen bestehen kann, und ist für Außen- oder Innenfassaden gleichermaßen gut geeignet. Risse und große Unebenheiten können ohne zusätzliche Nebenarbeit überbrückt werden.

Nach dem Ablüften der Isolationsschicht (bei rein physikalisch trocknendem Klebstoff) oder nach der Härtung des Klebstoffes bei chemisch abbindenden (härtenden) Systemen können die weiteren baulichen Maßnahmen folgen, wie z.B. Aufbringen eines Sichtputzes oder von Fassaden. Zum möglichst guten Ablüften oder Härten kann es dabei zweckmäßig sein, die Isolationsschicht vor dem Aufbringen weiterer Schichten einer Wärmebehandlung, z.B. mit einem Heißluftstrom, zu unterziehen.

RÜTGERSWERKE Aktiengesellschaft, 6000 Frankfurt a.Main

Pat-734-R

P a t e n t a n s p r ü c h e

1. Verfahren zum Aufbringen von Isolationsschichten auf Oberflächen, d a d u r c h   g e k e n n z e i c h n e t, daß man das Isolationsmaterial in Form kleiner, mit einem Bindemittel umhüllter Partikel auf die zu isolierende Fläche aufbringt.

2. Verfahren nach Anspruch 1, d a d u r c h   g e k e n n z e i c h n e t, daß man das Isolationsmaterial in Form kugelförmiger Teilchen mit einem Durchmesser von 2 - 8 mm aufbringt.

3. Verfahren nach Anspruch 1 oder 2, d a d u r c h   g e k e n n z e i c h n e t, daß man die Teilchen auf die zu isolierende Oberfläche aufbläst und während ihres Fluges vom Aufblasgerät zur isolierenden Oberfläche mit dem Bindemittel umhüllt.

4. Verfahren nach einem der Ansprüche 1 - 3, d a d u r c h g e k e n n z e i c h n e t, daß das Isolationsmaterial in Schichtstärken von 1 - 8 cm auf der zu isolierenden Oberfläche aufgebracht wird.

5. Verfahren nach einem der Ansprüche 1 - 4, d a d u r c h g e k e n n z e i c h n e t, daß man als Isolationspartikel vorgeschäumte Polystyrolkugeln verwendet.

6. Verfahren nach einem der Ansprüche 1 - 5, d a d u r c h g e k e n n z e i c h n e t, daß man als Bindemittel Lösungen oder Emulsionen von Polymeren verwendet.

7. Verfahren nach einem der Ansprüche 1 - 6, d a d u r c h g e k e n n z e i c h n e t, daß man härtbare Bindemittel verwendet.

8. Verfahren nach Anspruch 7, d a d u r c h  g e - k e n n z e i c h n e t, daß man härtbare Mischungen auf der Grundlage von Epoxidharzen mit einem Molekulargewicht von 400 - 30 000 verwendet.

Europäisches
Patentamt

EUROPÄISCHER RECHERCHENBERICHT

Nummer der Anmeldung

EP 80 20 0685.8

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - A1 - 2 746 783 (INDUSTRIA ITALI-ANA PETROLI) <br> * Ansprüche und Seite 11 * <br> --- | 1,5,7 | C 04 B 19/02 <br> C 04 B 43/00 <br> C 04 B 41/32 <br> E 04 F 21/12 |
| X,P | GB - A - 2 012 620 (BRITISH PETROLEUM CO.) <br> * ganzes Dokument * <br> --- | 1,3, 5-7 | |
| | DE - B1 - 2 817 200 (BASF) <br> * ganzes Dokument * <br> --- | 1,2, 4-7 | RECHERCHIERTE SACHGEBIETE (Int. Cl.3) <br><br> B 05 D 1/00 |
| | DE - A1 - 2 706 433 (EUROC DEVELOP-MENT AB) <br> --- | 1,3,6, 7 | C 04 B 19/02 <br> C 04 B 21/08 <br> C 04 B 25/00 <br> C 04 B 41/00 |
| A | DE - A1 - 2 641 195 (K. SCHLECHT) <br> * Seiten 3 und 4 * <br> --- | 1,3,6, 7 | C 04 B 43/00 <br> E 04 F 21/00 |
| A | FR - A1 - 2 390 396 (U.A. BENSAID) <br> --- | | |
| A | GB - A - 885 732 (BRITISH TRANSPORT COMMISSION) <br> * Seite 6 * <br> --- | 8 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| A | AT - B - 280 570 (VEB INDUSTRIE-ISOLIERUNGEN) <br> ---- | | |

X  Der vorliegende Recherchenbericht wurde für alle Patentansprüche erstellt.

&: Mitglied der gleichen Patent-familie, übereinstimmendes Dokument

| Recherchenort | Abschlußdatum der Recherche | Prüfer |
|---|---|---|
| Berlin | 05-11-1980 | HÖRNER |

EPA form 1503.1   06.78